# EUROPÄISCHE PATENTSCHRIFT

(11) **EP 0 787 614 B1**
(45) Veröffentlichungstag und Bekanntmachung des Hinweises auf die Patenterteilung: **22.11.2000**
(21) Anmeldenummer: 96112327.0
(22) Anmeldetag: 31.07.1996
(51) Int. Cl.: B60K 15/04

(54) **Betankungsanordnung zum roboterfähigen Betanken mit Kraftstoff**
Refuelling arrangement allowing refuelling by robot
Agencement de remplissage permettant le remplissage avec carburant par robot

(30) Priorität: 05.09.1995 DE 19532775
(43) Veröffentlichungstag der Anmeldung: 06.08.1997
(73) Patentinhaber: DaimlerChrysler AG, 70567 Stuttgart (DE)
(72) Erfinder: Steinkämper, Reinhard, 71364 Winnenden (DE); Kremer, Adolf, 71686 Remseck (DE); Schmid, Ronald, 73275 Ohmden (DE); Fischer, Andreas, 73262 Reichenbach (DE); Müller, Andreas, 70567 Stuttgart (DE)

(56) Entgegenhaltungen:
- EP-A- 0 362 576
- EP-A- 0 612 639
- DE-C- 4 217 966

## Beschreibung

Die Erfindung betrifft eine Betankungsanordnung gemäß dem Oberbegriff des Patentanspruches 1.

Eine gattungsgemäße Betankungsanordnung ist aus der EP 0 612 639 A1 bekannt. Diese beinhaltet dort eine robotergeführte Zapfpistole und einen an einem Verschluß für den Tankeinfüllstutzen eines Kraftfahrzeuges angeordneten Andockaufsatz, der hohlzylindrisch ausgebildet ist und eine Innenverzahnung besitzt, in die eine am austrittsseitigen Ende des Füllrohres der Zapfpistole umfänglich ausgebildete Außenverzahnung beim Andocken formschlüssig eingreifen kann, so daß durch Verdrehen des Andockaufsatzes über die Zapfpistole ein Öffnen des Verschlußes herbeigeführt und eine abrutschsichere Halterung der Zapfpistole am Kraftfahrzeug im Andockzustand gewährleistet werden kann. Ein derartiges Andocken ist dabei jedoch nur dann möglich, wenn die Zapfpistole mit ihrer Verzahnung exakt mit der geeigneten Winkelstellung zur Verzahnung des Andockaufsatzes geführt wird. Dies ist nur mit einer teueren und sehr aufwendigen Sensorik und einer mit dieser verbundenen hochpräzisen Steuerung für die Zapfpistole möglich. Bei Verzicht auf eine derartige Sensorik und Steuerung ist die Wahrscheinlichkeit groß, daß die Zähne der zapfpistolenseitigen Verzahnung des Betankungsroboters beim Andockvorgang nicht in die Lücken der Verzahnung im Andockaufsatz treffen, sondern vielmehr mit dessen Zähnen aufeinanderstoßen. Der Roboter, der ohne geeignete zusätzliche Sensorik die Fehlstellung nicht erkennt, schiebt die Zapfpistole weiter gegen den Einfüllstutzen, was zu Beschädigungen am Einfüllstutzen und zu einem Wegschieben des Fahrzeuges führen kann. Zwar kann die Wahrscheinlichkeit dieses Falles, d.h. des Auftreffens der Verzahnungsköpfe aufeinander durch einer beiderseitige sehr feine Verzahnung mit angespitzten Zähnen minimiert werden. Eine derartige Verzahnung ist jedoch schmutzempfindlich und durch Abnutzung störanfällig. Ebenfalls können beim Verlassen des Fahrzeuges während des Betankungsvorganges durch einen Fahrzeuginsassen Schaukelbewegungen bei dem besagten Fahrzeug auftreten, die zu einer Trennung der beiden Verzahnungen führen und den Betankungsvorgang abrupt und ungewollt unterbrechen, wobei gegebenenfalls aus der Zapfpistole Kraftstoff in die Umgebung frei ausfließen kann.

Der Erfindung liegt die Aufgabe zugrunde, eine gattungsgemäße Betankungsanordnung dahingehend weiterzubilden, daß in einfacher Weise ein zu jeder Zeit funktionssicheres und behinderungsfreies Andocken der Zapfpistole am Einfüllstutzen des Fahrzeugkraftstofftankes für eine Betankung erreicht wird.

Die Aufgabe ist erfindungsgemäß durch die im Patentanspruch 1 angegebenen kennzeichnenden Merkmale gelöst.

Dank der Erfindung wird die zum Verschwenken des Verschlußdeckels des Einfüllstutzens notwendige formschlüssige Verbindung zwischen Zapfpistole und Einfüllstutzen anstatt durch Verzahnung durch radial ausstellbare Formschlußelemente bewirkt, die in Andocklage in Gegenformschlußelemente an der Zapfpistole und/oder dem Andockaufsatz formschlüssig eingreifen, wobei im Falle einer anfänglichen Fehllage der radial verstellbaren Formschlußelemente zu den starr angeordneten Formschlußelementen, bei der sich kein Formschluß ergibt, durch eine geringe Drehung um die körpereigene Achse die Raststellung und damit die sichere Ankoppellage erreicht wird. Der geringe Tordieraufwand macht sich besonders bei der robotergeführten Zapfpistole mit den an sie angeschlossenen Kraftstoffschläuchen dahingehend günstig bemerkbar, daß Torsionen der Zapfpistole in größerem Umfang verhindert werden, die sonst zu erheblichen Funktionsstörungen bei der Betankung durch eventuelles Abknicken der Kraftstoffschläuche führen würden. Verschmutzungen am Andockaufsatz oder an der Zapfpistole können das Andocken nicht mehr behindern, da die radial verstellbaren Formschlußelemente erst dann zum Eingriff in die starren Gegenformschlußelemente gelangen, wenn die Andocklage der Zapfpistole im Andockaufsatz erreicht ist und die radiale Betätigung der verstellbaren Formschlußelemente über ein diese beaufschlagendes Fluid erfolgt. Ansonsten tauchen sie vollständig in den Andockpartner ein, an dem sie angebracht sind. Da der Druck des Fluides und somit die auf die Formschlußelemente wirkenden Kräfte begrenzt sind, können keine Verzwängungen der Zapfpistole im Andockaufsatz bei einer Fehllage der Formschlußelemente der beiden Andockpartner zueinander auftreten. Somit wird insgesamt in relativ einfacher Weise ein unabhängig von der relativen Winkellage der Zapfpistole zum Einfüllstutzen verlaufendes behinderungsfreies Andocken ermöglicht wird. Durch die in der Raststellung in Axial- und Umfangsrichtung bewirkte Verriegelung der Zapfpistole am Einfüllstutzen wird gleichzeitig einer unerwünschte axiale Entkopplung von Zapfpistole und Einfüllstutzen bei Schaukelbewegungen des Fahrzeuges verhindert und somit eine funktionssichere Ankopplung erzielt. Vorteilhaft ist desweiteren, daß die funktionssichere und behinderungsfreie Ankopplung in einfacher Weise ohne von außen eingreifende Hilfsmittel lediglich durch eine radiale fluidische Druckbeaufschlagung der verstellbaren Formschlußelemente in der Andocklage der Zapfpistole zustande kommt. Weiterhin bietet sich mit der Erfindung eine bauraumsparende Lösung für eine Betankungsanordnung an, bei der eine Vielzahl von mechanischen Komponenten entfallen, die bei einer mechanischen Zwangsbetätigung der beweglichen Formschlußelemente, insbesondere innerhalb der Zapfpistole notwendig sind und deren Füllkanal einengen, und bei der im Tankmuldenbereich baulich enge Verhältnisse herrschen.

Zweckmäßige Ausgestaltungen der Erfindung können den Unteransprüchen entnommen werden; im übrigen ist die Erfindung anhand mehrerer in der Zeichnung dargestellter Ausführungsbeispiele nachfolgend näher erläutert; dabei zeigt:
Fig. 1 die erfindungsgemäße Betankungsanordnung abschnittsweise in einem seitlichen Längsschnitt in Eingriffslage der Formschlußelemente mit einem am unteren Ende der Zapfpistole vorgesehenen Elastomerschlauch und an ihm angeordneten Verzahnungssegmenten und mit einer umlaufenden Innenverzahnung am Andockaufsatz,
Fig. 2 eine Draufsicht auf einen Querschnitt der Anordnung aus Fig. 1 in Andocklage der Zapfpistole mit unbetätigten Verzahnungssegmenten,
Fig. 3 abschnittsweise die erfindungsgemäße Anordnung in Andocklage und einfüllbereitem Zustand der Zapfpistole mit an dieser angeordneten Verzahnungssegmente tragenden Klinken, die fluidisch betätigt sind, in einem seitlichen Längsschnitt,
Fig. 4 eine Draufsicht auf einen Querschnitt der Anordnung aus Fig. 3 in einem Schnitt entlang der Linie IV-IV.

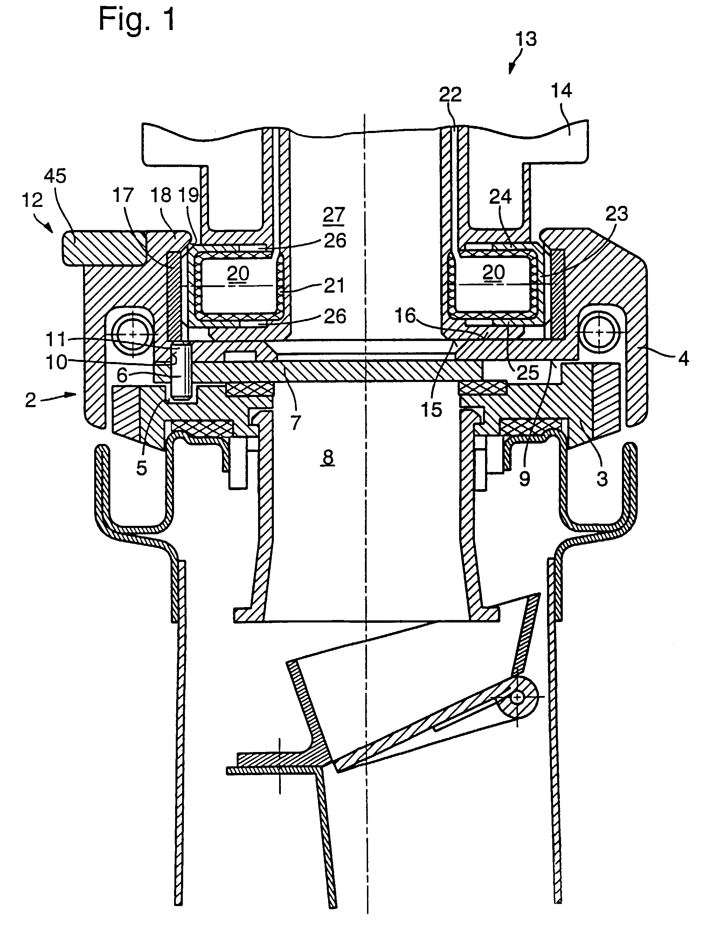

In Fig. 1 ist ein Einfüllstutzen 1 eines Kraftstofftankes eines Kraftfahrzeuges dargestellt, der mit einem bajonettartig auf ihm aufgeschraubten Verschlußdeckel 2 verschlossen ist. Der Verschlußdeckel 2 besteht im wesentlichen aus zwei Ringkörpern 3,4, wobei der Verschlußdeckel 2 mit dem Ringkörper 3 am Einfüllstutzen 1 verschraubt ist. Im Ringkörper 3 ist oberseitig eine vertikal angeordnete Drehachse (in der Zeichnung nicht sichtbar) für einen horizontal verschwenkbaren und mit der Achse fest verbundenen Schwenkschiebers 7 vorgesehen, der einen zentralen Einlaßkanal 8 des Ringkörpers 3 dichtend verschließt. Der Ringkörper 4 ist auf dem Ringkörper 3 oberseitig um die körpereigene Achse verdrehbar gelagert und weist an seiner Unterseite 9 randnah eine Aufnahme 10 auf, in die ein Mitnahmestift 6 für den Schwenkschieber 7 mit seinem oberen Ende 11 im Pressitz eingreift. Der Mitnahmestift 6 bewegt über eine Verdrehung des Ringkörpers 4 den Schwenkschieber 7 in Umfangsrichtung von einer Öffnungs- in eine Schließstellung und umgekehrt je nach Drehrichtung des Ringkörpers 4, wobei der Mitnahmestift 6 innerhalb einer radialen im Schwenkschieber 7 eingearbeiteten Führungsbahn geführt ist, wobei der Stift 6 im Ringkörper 3 oberseitig in einem kreisbogenförmigen Freilauf 5 entlangläuft.

Der Ringkörper 4 weist oberseitig einen koaxialen hohlzylindrischen Andockaufsatz 12 auf, in den eine Zapfpistole 13 eines Tankroboters mit einem austrittseitigen Ende 14, im folgenden "Endeffektor" genannt, zur Betankung eintaucht und mit seiner Stirnseite 15 an der Oberseite 16 des Ringkörpers 4 in Andocklage anliegt. Im Innenumfang des Andockaufsatzes 12 ist eine umlaufende Verzahnung 17 geringen Teilungsmoduls ausgebildet, die von einem stirnseitig am Andockaufsatz 12 angeformten, radial nach innen vorspringenden umlaufenden Bund 18 überdeckt ist. Der Bund 18 ist auf seiner verzahnungszugewandten Seite 19 angeschrägt.

Am Endeffektor 14 ist nahe dessen Stirnseite 15 eine umlaufende Ringnut 20 eingearbeitet, in der ein ringförmiger Elastomerschlauch 21 befestigt ist. Der Elastomerschlauch 21 ist oberseitig an einen ringförmigen Fluidkanal 22 angeschlossen, der axial im Endeffektor 14 verläuft und anderenends mit einer Druckquelle verbunden ist. Der Elastomerschlauch 21 ist von dem unter Druck stehenden Fluid, das flüssig oder auch gasförmig sein kann, elastisch aufweitbar und bildet das Betätigungsorgan für ein als kreisbogenförmiges Verzahnungssegment 23 ausgebildetes Gegenformschlußelement zur Verzahnung 17.

Das Verzahnungssegment 23 ist U-förmig ausgebildet und umgreift den Elastomerschlauch 21 ober- und unterseitig mit seinen Schenkeln 24 und 25 klammerartig. Die Schenkel sind dabei in vom Elastomerschlauch 21 und der Ringnut 20 ober- und unterseitig eingegrenzten umlaufenden Aussparungen 26 radial geführt. Denkbar ist auch jede andere Art der Anordnung des Verzahnungssegmentes 23 am Endeffektor 14 und der Ausbildung. Es muß jedoch gesichert sein, daß das Verzahnungssegment 23 derart relativ zum Schlauch 21 angeordnet ist, daß es bei einem druckbedingten Aufweiten des Schlauches 21 an die Verzahnung 17 des Andockaufsatzes 12 anpreßbar ist.

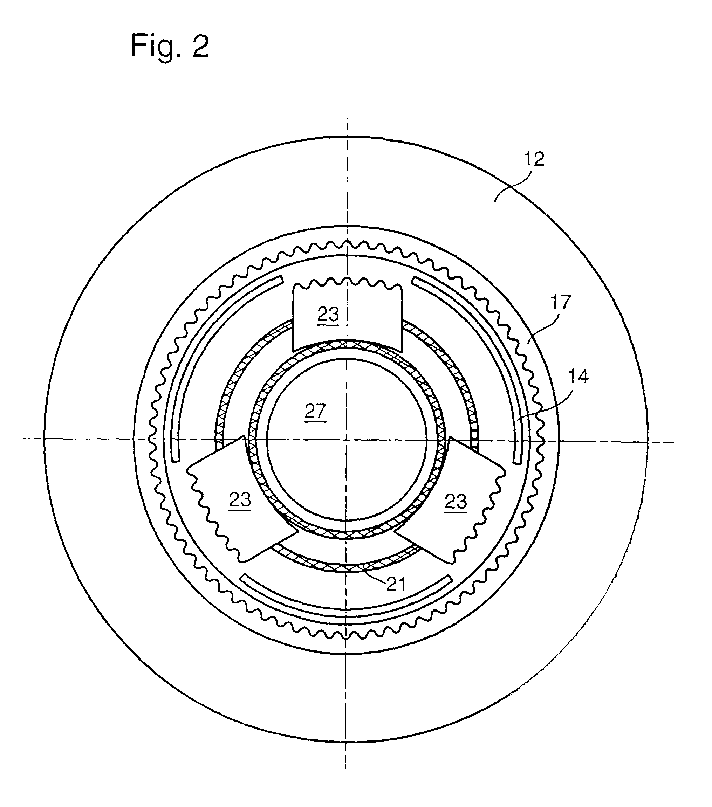

Wie aus Fig. 2 zu ersehen ist, sind am Elastomerschlauch 21 drei Verzahnungssegmente 23 in Umfangsrichtung symmetrisch zueinander angeordnet. Der Endeffektor 14 hat angedockt, wobei sich die Verzahnungssegmente 23 noch nicht im Eingriff mit der Verzahnung 17 des Andockaufsatzes 12 befinden. Vielmehr sind sie im Endeffektor 14 noch gänzlich eingetaucht, so daß keine Verklemmungen der Verzahnungen beim Andocken auftreten können.

Durch Druckbeaufschlagung des Schlauches 21 werden die Verzahnungssegmente 23 nun radial nach außen ausgestellt und greifen in die Verzahnung 17 ein. Dadurch ist nun der Formschluß der Verzahnung 17 und der Verzahnungssegmente 23 erreicht, wobei die Zapfpistole 13 in Umfangsrichtung verriegelt ist. Sodann kann eine Betankung durch ein durch eine zentrale Durchführung 27 des Endeffektors 14 geführtes Füllrohr nach Öffnen des Schwenkschiebers 7 über Verdrehen des oberen Ringkörpers 4 mittels Verdrehung der Zapfpistole 13 eingeführt werden. Der Teilungsmodul der Formschlußelemente 17,23, deren Verzahnungen komplementär zu einander ausgebildet sind, ist derart gering und die Verzahnung derart vielzähnig, daß im Falle des Auftreffens der Zahnköpfe beider Verzahnungen aufeinander nur eine minimale Drehung der Zapfpistole 13, bzw. des Endeffektors 14 genügt, um die Verzahnungen ineinander einrasten zu lassen.

Die axiale Verriegelung der Zapfpistole 13 wird von dem umlaufenden Bund 18 bewerkstelligt, der einen oberseitigen Anschlag für die radial ausgestellten Verzahnungssegmente 23 bildet. Durch die Anschrägung seiner der Verzahnung 17 und in Eingriffslage auch den Verzahnungssegmenten 23 zugewandten Seite 19 kann nach Überwinden einer bestimmten, von dem Winkel der Anschrägung abhängigen Axialhaltekraft die Zapfpistole 13 bei einem Notabdockmanöver aus dem Andockaufsatz 12 schnell herausgleiten. Anzumerken ist dabei, daß der Druck des Arbeitsmediums, also des Fluides, derart ausgelegt ist, daß beim Notabdocken bei Übersteigen der Axialhaltekraft ein radiales Ausweichen des Verzahnungssegmentes 23 bzw. eine Kompression des Elastomerschlauches 21 in gewissem Rahmen möglich ist ohne daß Verzwängungen auftreten. Normales Abdocken erfolgt durch Druckentlastung des Schlauches 21, so daß die Verzahnungssegmente 23 wieder in den Endeffektor 14 gänzlich eintauchen.

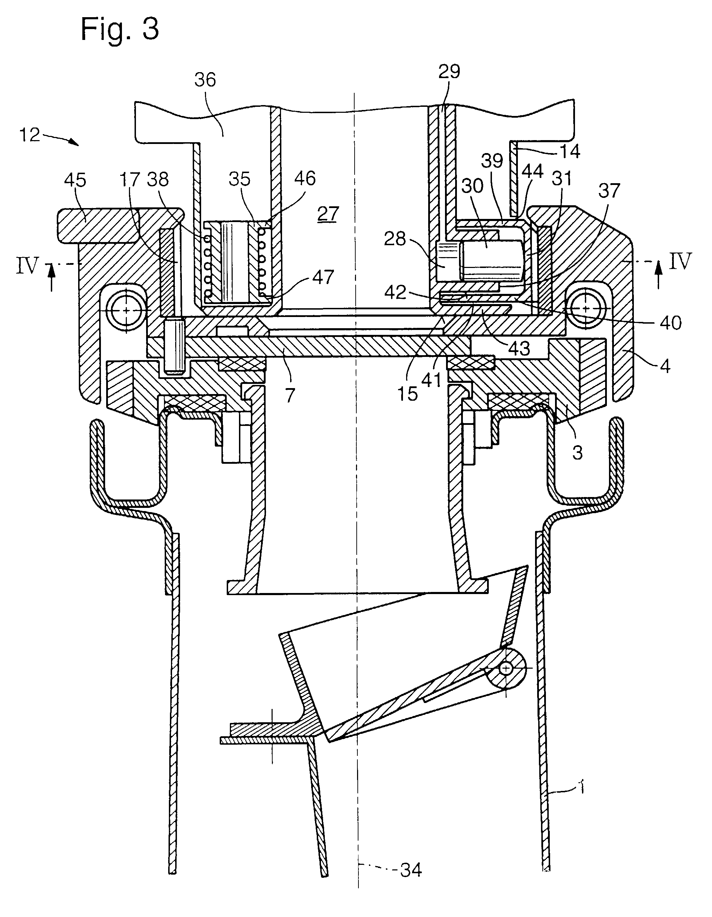

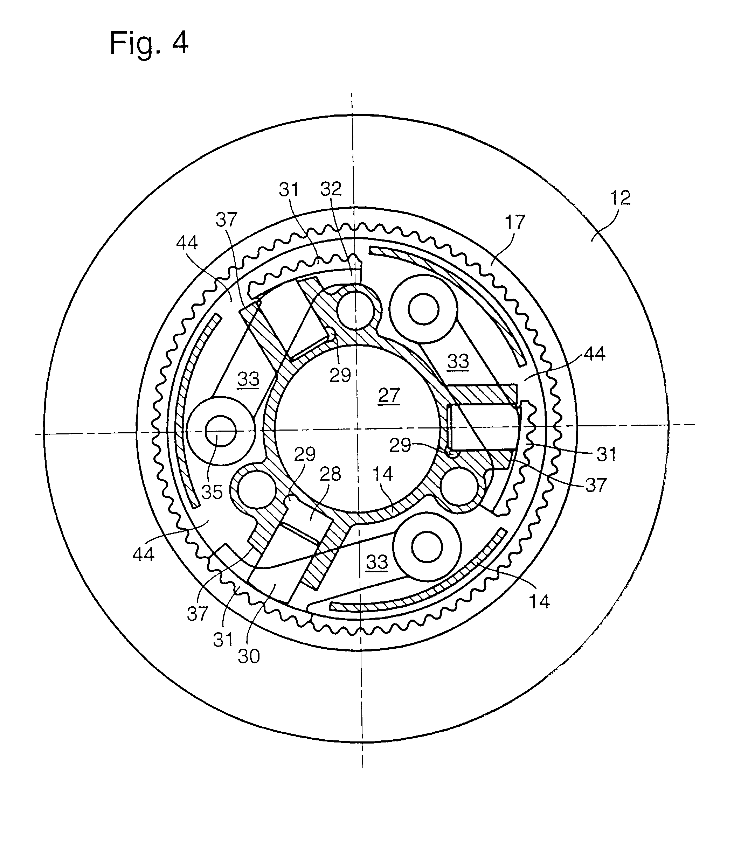

Eine weitere Variante der Erfindung zeigen die Fig. 3 und 4. In Abweichung vom ersten Ausführungsbeispiel ist am Endeffektor 14 nahe seiner Stirnseite 15 drei in ihm vollständig aufgenommene, in Umfangsrichtung symmetrisch zueinander angeordnete radial ausgerichtete Arbeitszylinder 28 angeformt, die jeweils rückseitig von einem Fluidkanälen 29 angeschnitten und vorderseitig offen ausgebildet sind.

Im Arbeitszylinder 28 ist ein Arbeitskolben 30 geführt, der das Betätigungsorgan für ein Verzahnungssegment 31 geringen Teilungsmoduls bildet, das am freien Ende 32 einer Klinke 33 angebracht ist. Die Klinke 33 ist quer zur Andockrichtung um eine zur Einfüllstutzenachse 34 parallele Drehachse 35 verschwenkbar. Das Verzahnungssegment 31 ist somit innenseitig vom Arbeitskolben 30 über Fluiddruck beaufschlagbar. Die Drehachse 35 der Klinke 33 ist innerhalb einer randnahen axialen Aussparung 36 des Endeffektors 14 unmittelbar oberhalb seiner Stirnseite 15 drehbar befestigt. Die Klinke 33, bestehend aus zwei parallelen beabstandeten Stegen 46,47, die an der Drehachse 35 und andererseits am Verzahnungssegment 31 befestigt sind, übergreift und untergreift mit diesen den ihr zugeordneten Arbeitszylinder 28, wobei in unbetätigter Stellung des Verzahnungssegmentes 31 dieses am Öffnungsrand 37 des Arbeitszylinders 28 anliegt. Die Klinke 33 ist dabei von einer vorgespannten Schenkelfeder 38 beaufschlagt, die die Drehachse 35 der Klinke 33 umgibt und sich an dieser abstützt und das Verzahnungssegment 31 zur Anlage am Arbeitszylinder 28 drückt.

Das Verzahnungssegment 31 ist U-förmig ausgebildet und umgreift den Arbeitszylinder 28 mit seinen Schenkeln 39,40 mit Spiel. Der untere Schenkel 40 ist dabei mit Spiel in einem radialen Spalt 41 zwischen der Unterseite 42 des Arbeitszylinders 28 und des die Stirnseite 15 des Endeffektors 14 beinhaltenden Wandungsabschnittes 43 geführt. Der obere Schenkel 39 am Steg 46 und der untere Schenkel 40 am Steg 47 der Klinke 33 befestigt. Der Endeffektor weist umfangsseitig Öffnungen 44 auf, durch die die Verzahnungssegmente 31, die in unbetätigter Lage gänzlich im Endeffektor 14 eingetaucht sind, herausschwenken können.

Die Drehachsen 35 der Klinken 33 sind ebenfalls in Umfangsrichtung symmetrisch und derart angeordnet, daß sie bezüglich der zentralen Durchführung 27 des Endeffektors diametral einem Arbeitszylinder 28 gegenüberliegen, der jeweils einer anderen Klinke 33 zugeordnet ist. Um eine Anpressung des Verzahnungssegmentes 31 an die vielzähnige Verzahnung 17 des Andockaufsatzes 12 und damit eine Raststellung der Andockpartner zu erreichen, muß die relative Lage der Drehachse 35 im Endeffektor 14 und die Bemessung der Klinkenlänge sowie die Lage des Öffnungsrandes 37 des Arbeitszylinders 28 derart sein, daß der Verschwenkwinkel im Bereich zwischen 5° und 20 ° einheitlich für alle vorgesehenen Klinken 33 liegt.

Die Fluidkräfte auf die Arbeitskolben 30 können sehr klein gehalten sein, da konstruktionsbedingt beim Drehen des Endeffektors 14 bzw. der Zapfpistole 13 ein Drehmoment um die Klinkenachse 35 entsteht, welches die Verzahnungssegmente 31 nach außen gegen die Verzahnung 17 drückt und dabei die vom Fluiddruck erbrachte Verschwenkbewegung unterstützt. Das Andocken und Abdocken verläuft in entsprechender Weise wie im ersten in den Fig. 1 und 2 dargestellten Ausführungsbeispiel, wobei bei Anlegen eines Betätigungsdruckes über die Fluidkanäle 29 die Klinken 33 um die Drehachse 35 radial verschwenkt wird. Hierbei können auch durch Einleitung eines Druckes in bestimmten Arbeitszylindern 28 einzelne Verzahnungssegmente 31 selektiv betätigt werden (Fig. 4). Durch die geringen Teilungsmodule der Verzahnungen 31 und 17 ist ein eventueller Leerweg bis zum Verrasten der Verzahnungen ineinander sehr klein und damit die Torsionsbeanspruchung der Zapfpistole 13 und der angeschlossenen Kraftstoffschläuchen sehr gering.

Für das Notabdocken weisen die Verzahnungesegmente 31 im übrigen oberseitig eine Anschrägung 45 auf mit denen sie am umlaufenden Bund 18, der die Zapfpistole 13 axial in Raststellung verriegelt, anliegen und bei Übersteigen einer Axialhaltekraft aus der Verzahnung 17 verklemmungsfrei herausgleiten können. Es ist denkbar, daß der Bund 18 sowohl im ersten Ausführungsbeispiel als auch hier am Endeffektor 14 in Stirnseitennähe umlaufend angeordnet ist, wobei der Bund 18 die Verzahnung 17 nicht obersondern untergreift und damit ebenfalls eine axiale Verriegelung der Zapfpistole 13 am Andockaufsatz 12 erreicht wird. Die Anschrägungen von Bund 18 und Verzahnung 17 müssen entsprechend für die Ermöglichung eines Notabdockens aufeinander abgestimmt sein. Das normale Abdocken erfolgt, in dem die Klinken 33 durch Wegnahme des Fluiddruckes druckentlastet werden, so daß die Schenkelfedern 38 aufgrund des Entfalls der fluidischen Gegenkraft die Klinken 33 und somit die Verzahnungssegmente 31 in ihre Eintauchstellung innerhalb des Endeffektors 14 zurückschwenken können.

Für eine manuelles Öffnen und Schließen des Verschlußdeckels 2 ist am Andockaufsatz 12 in dessen Umfang in Stirnseitennähe integriert ein Bügel 45 angeordnet, der um eine quer zur Andockrichtung verlaufende Achse schwenkbar ist, so daß bei einer 90°-Verschwenkung des Bügels 45 eine Handhabungsstellung - gegebenenfalls in einer Raststellung - erreicht ist, in der der Verschlußdeckel 2 in einfacher Weise durch Drehen des Bügels 45 in Umfangsrichtung geöffnet werden kann. Der Bügel 45 ist federbeaufschlagt, wobei die Feder den Bügel 45 in Richtung seiner Nichtgebrauchslage am Umfang des Andockaufsatzes 12 zieht.

## Patentansprüche

1. Betankungsanordnung zum roboterfähigen Betanken eines Fahrzeuges mit Kraftstoff, mit einer Zapfpistole (13) und einem Tankeinfüllstutzen (1), an dem einfüllseitig ein mit einem zentralen Durchlaß (8) versehener Andockaufsatz (12) angebracht ist, der mit einem oberen Abschnitt (4) um die Symmetrieachse (34) für den Öffnungs- und Schließvorgang eines Tankverschlußes (2) verdrehbar ist und in dem die Zapfpistole (13) mit ihrem austrittseitigen Ende (14) unter Bildung einer formschlüssigen Verbindung von Zapfpistole (13) und Andockaufsatz (12) andockbar ist, wobei an deren Umfang verteilt angeordnete Formschlußelemente (17,23,31) nach Art von Zähnen eines Naben-profiles im betankungsbereiten Zustand der Zapfpistole (13) formschlüssig ineinandergreifen,
**dadurch gekennzeichnet,**
daß an einem der Andockpartner (12,13) radial bewegliche Formschlußelemente (23,31) angebracht sind, die in radialer Richtung fluidisch betätigbar sind, und daß die Formschlußelemente (17) des anderen Andockpartners (12,13) starr ausgebildet sind, wobei in diese die beweglichen Formschlußelemente (23,31), die in unverriegeltem Zustand der beiden Andockpartner (12,13) in ihren Andockpartner (12,13) gänzlich eingetaucht sind, in einer in Umfangsrichtung und axial verriegelnd wirkenden Raststellung einrastbar sind.

2. Anordnung nach Anspruch 1,
**dadurch gekennzeichnet,**
daß die starr angeordneten Formschlußelemente des einen Andockpartners (12,13) von einer umlaufenden vielzähniger Verzahnung (17) geringen Teilungsmoduls gebildet ist und daß die Formschlußelemente des anderen Andockpartners (12,13) kreisbogenförmige Verzahnungssegmente (23,31) mit komplementärer Verzahnung zur Verzahnung (17) sind, die mit dieser in Eingriff gelangen.

3. Anordnung nach Anspruch 1,
**dadurch gekennzeichnet,**
daß die radial beweglichen Formschlußelemente (23,31) durch fluidisch antreibbare, radial wirksame Betätigungsorgane (21,30) in Richtung der starr angeordneten Formschlußelemente (17) verschiebbar sind.

4. Anordnung nach Anspruch 3,
**dadurch gekennzeichnet,**
daß die Betätigungsorgane von einem an einem der Andockpartner (12,13) befestigten ringförmigen Elastomerschlauch (21) gebildet sind, der über einen mit einer Druckquelle verbundenen, im Andockpartner (12,13) verlaufenden Fluidkanal (22) elastisch aufweitbar ist, wobei die radial beweglichen Formschlußelemente (23) derart relativ zum Schlauch (21) angeordnet sind, daß sie bei einem druckbedingten Aufweiten des Schlauches (21) an die starr angeordneten Forschlußelemente (17) des anderen Andockpartners (12,13) anpreßbar sind.

5. Anordnung nach Anspruch 4,
**dadurch gekennzeichnet,**
daß der Elastomerschlauch (21) an einem der Andockpartner (12,13) in einer umlaufenden Ringnut (20) angeordnet ist und daß die radial beweglichen Formschlußelemente (23) den Elastomerschlauch (21) ober- und unterseitig mit Schenkeln (24,25) klammerartig umgreifen, wobei die Schenkel (24,25) in vom Elastomerschlauch (21) und der Ringnut (20) ober- und unterseitig eingegrenzten ringförmigen Aussparungen (26) radial geführt sind.

6. Anordnung nach Anspruch 1,
**dadurch gekennzeichnet,**
daß am dem die starren Formschlußelemente (17) aufweisenden Andockpartner (12,13) stirnseitig ein radial abstehender angeschrägter Bund (18) vorgesehen ist, der die radial beweglichen Formschlußelemente (23,31) des anderen Andockpartners (12,13) in Raststellung die Zapfpistole (13) axial verriegelnd hintergreift.

7. Anordnung nach Anspruch 2,
**dadurch gekennzeichnet,**
daß jeweils ein Verzahnungssegment (31) am freien Ende (32) einer Klinke (33) angebracht ist, die quer zur Andockrichtung um eine zur Einfüllstutzenachse (34) parallele Drehachse (35) verschwenkbar ist.

8. Anordnung nach Anspruch 7,
**dadurch gekennzeichnet,**
daß das Betätigungsorgan für die Klinke (33) ein in einem radial ausgerichteten und zur Gegenverzahnung (17) des anderen Andockpartners (12,13) hin offenen Arbeitszylinder (28) geführter Arbeitskolben (30) ist, mittels dem das Verzahnungssegment (31) innenseitig beaufschlagbar ist.

9. Anordnung nach Anspruch 8,
**dadurch gekennzeichnet,**
daß der Arbeitszylinder (28) rückseitig von einem Fluidkanal (29) angeschnitten ist, der mit einer Druckquelle verbunden ist.

10. Anordnung nach Anspruch 8,
**dadurch gekennzeichnet,**
daß das Verzahnungssegment (31) in unbetätigter Stellung am Öffnungsrand (37) des Arbeitszylinders (28) federbelastet durch eine um die Klinkendrehachse (35) angeordnete vorgespannte Schenkelfeder (38) anliegt.

11. Anordnung nach Anspruch 10,
**dadurch gekennzeichnet,**
daß die relative Lage der Drehachse (35) und die Bemessung der Klinkenlänge sowie die Lage des Öffnungsrandes (37) des Arbeitszylinders (28) derart ist, daß der Verschwenkwinkel zur Erreichung einer Raststellung des Verzahnungssegmentes (31) an der Gegenverzahnung (17) des anderen Andockpartners (12,13) im Bereich zwischen 5° und 20 ° einheitlich für alle vorgesehenen Klinken (33) liegt.

12. , Anordnung nach Anspruch 1,
**dadurch gekennzeichnet,**
daß am Andockaufsatz (12) ein in dessen Umfang integrierter um 90° in eine Vertikalstellung schwenkbarer Bügel (45) zum manuellen Öffnen und Schließen des Verschlußdeckels (2) angeordnet ist.

## Claims

1. Tank filling arrangement for filling the fuel tank of a vehicle with fuel by means of a robot, with a spigot pistol (13) and a tank filling tube (1) to which, on the filling side, is attached a docking fixture (12) provided with a central passage (8), an upper section (4) of which can be rotated about the symmetry axis (34) for the opening and closing processes of a tank closure element (2) and into which the spigot pistol (13) can be docked with its outlet end (14) to form a form-locking connection between the spigot pistol (13) and the docking fixture (12), such that form-locking elements (17, 23, 31) resembling the teeth of a hub profile distributed around their circumference engage in one another in a form-enclosing way when the spigot pistol is ready to begin filling the tank,
**characterised in that**
to one of the docking partners (12, 13) are attached radially movable form-locking elements (23, 31), which can be actuated in the radial direction by fluid pressure, and the form-locking elements (17) of the other docking partner (12, 13) are fixed, such that the movable form-locking elements (23, 31), which when the two docking partners (12, 13) are disengaged are fully retracted into the docking partner (12, 13) to which they are fined, can move into engagement with the fixed elements in a position that ensures circumferential and axial locking.

2. Arrangement according to Claim 1,
**characterised in that**
the fixed form-locking element on one docking partner (12, 13) is formed as a surrounding tooth array (17) with many teeth and small tooth separation pitch, and the form-locking elements of the other docking partner (12, 13) are toothed segments (23, 31) of circular arc shape with tooth arrays complementary to the array (17), which enter into engagement therewith.

3. Arrangement according to Claim 1,
**characterised in that**
the radially movable form-locking elements (23, 31) can be displaced towards the fixed form-locking elements (17) by means of actuation elements that can be operated by fluid pressure.

4. Arrangement according to Claim 3,
**characterised in that**
the actuation elements consist of an annular elastomer hose (21) attached to one of the docking partners (12, 13), which can be elastically expanded via a fluid channel (22) extending through the docking partner (12, 13) and connected to a pressure source, and the radially movable form-locking elements (23) are arranged relative to the hose (21) in such a way that when the hose (21) is expanded by pressure they can be pressed against the fixed form-locking elements (17) of the other docking partner (12, 13).

5. Arrangement according to Claim 4,
**characterised in that**
the elastomer hose (21) is arranged on one of the docking partners (12, 13) in a circumferential annular groove (20) and the radially movable form-locking elements (23) extend over the elastomer hose (21) above and below it with flanks (24, 25) in the manner of brackets, the said flanks (24, 25) fitting radially in annular recesses (26) delimited above and below by the elastomer hose (21) and the annular groove (20).

6. Arrangement according to Claim 1
**characterised in that**
on the docking partner (12, 13) fitted with the fixed form-locking elements (17), at the end, a radially projecting collar (18) with an oblique face is provided, which engages with the radially movable form-locking elements (23, 31) of the other docking partner (12, 13) in the locked position and holds the spigot pistol (13) axially locked.

7. Arrangement according to Claim 2,
**characterised in that**
in each case a toothed segment (31) is attached at the free end (32) of a detent (33), the said detent being able to swivel transversely to the docking direction about a rotation axle (35) parallel to the filling tube axis (34).

8. Arrangement according to Claim 7
**characterised in that**
the actuating element for the detent (33) is a working piston (30) guided in a working cylinder (28) directed radially and open towards the opposing tooth array (17) of the other docking partner (12, 13), by means of which the toothed segment (31) can be acted upon from the inside.

9. Arrangement according to Claim 8,
**characterised in that**
at the back, the working cylinder (28) is intersected by a fluid channel (29) connected to a pressure source.

10. Arrangement according to Claim 8,
**characterised in that**
in its unactuated position the toothed segment (31) rests against the open rim (37) of the working cylinder (28) under spring loading by a pre-stressed torsion spring (38) surrounding the rotation axle (35) of the detent.

11. Arrangement according to Claim 10,
**characterised in that**
the relative positions of the rotation axles (35) and the length of the detents, as well as the position of the open rim (37) of the working cylinders (28), are such that the swivel angle to reach a position of engagement between the toothed segments (31) and the opposing tooth array (17) of the other docking partner (12, 13) is the same for all the detents (33) provided and in the range between 5° and 20°.

12. Arrangement according to Claim 1,
**characterised in that**
to enable the manual opening and closing of the closure cover (2), a handle (45) which can be swivelled through 90° into a vertical position is arranged on the docking fixture (12) and integrated into its circumference.

## Revendications

1. Dispositif de ravitaillement pour le ravitaillement robotisé en carburant d'un véhicule, avec un pistolet distributeur (13) et une tubulure de remplissage de réservoir (1), sur laquelle, du côté remplissage, est montée une garniture d'accostage (12) munie d'un passage central (8), garniture susceptible de tourner, par un tronçon supérieur (4), autour de l'axe de symétrie (34) pour effectuer le processus d'ouverture et de fermeture d'un obturateur de réservoir (2) et dans laquelle le pistolet distributeur (13) est susceptible d'être accosté par son extrémité (14) située côté sortie, en constituant une liaison à ajustement de forme entre le pistolet distributeur (13) et la garniture d'accostage (12), des éléments de liaison à ajustement de forme (17, 23, 31), répartis sur sa périphérie, s'engageant les uns dans les autres par une liaison à ajustement de forme, à la façon de dents d'un profil de moyeu, lorsque le pistolet distributeur (13) est à l'état prêt au ravitaillement,
caractérisé en ce que sur l'un des partenaires d'accostage (12, 13) sont montés des éléments de liaison à ajustement de forme (23, 31) mobiles radialement, qui sont actionnables fluidiquement en direction radiale, et en ce que les éléments de liaison à ajustement de forme (17) de l'autre partenaire d'accostage (12, 13) sont rigides, les éléments de liaison à ajustement de forme (23, 31) mobiles, introduits complètement dans leur partenaire d'accostage (12, 13), lorsque les deux partenaires d'accostage (12, 13) sont à l'état non verrouillés, sont encliquetables dans les éléments de liaison à ajustement de forme (17) de l'autre partenaire d'accostage (12, 13), en une position d'encliquetage, agissant avec effet de verrouillage en direction périphérique et axialement.

2. Dispositif selon la revendication 1, caractérisé en ce que les éléments de liaison à ajustement de forme rigides d'un premier partenaire d'accostage (12, 13) sont constitués par une denture (17) à grand nombre de dents sur son pourtour, à petit module de denture, et en ce que les éléments de liaison à ajustement de forme de l'autre partenaire d'accostage (12, 13) sont des segments de denture (23, 31) en forme d'arc de cercle, ayant une denture complémentaire de la denture (17), passant en prise avec celle-ci.

3. Dispositif selon la revendication 1, caractérisé en ce que les éléments de liaison à ajustement de forme (23, 31) mobiles radialement sont déplaçables dans la direction des éléments à liaison par ajustement de forme (17) rigides, au moyen d'organes d'actionnement (21, 30) agissant radialement, susceptibles d'être entraînés fluidiquement.

4. Dispositif selon la revendication 3, caractérisé en ce que les organes d'actionnement sont constitués par un tuyau en élastomère (21) de forme annulaire, fixé sur l'un des partenaires d'accostage (12, 13), tuyau susceptible d'être élargi élastiquement par l'intermédiaire d'un canal à fluide (22) relié à une source de pression, s'étendant dans le partenaire d'accostage (12, 13), les éléments de liaison à ajustement de forme (23) mobiles radialement étant disposés par rapport au tuyau (21) de manière à être susceptibles d'être pressés sur les éléments de liaison à ajustement de forme (17) rigides de l'autre partenaire de réaction (12, 13), lorsqu'un élargissement du tuyau (21) se produit sous l'effet de la pression.

5. Dispositif selon la revendication 4, caractérisé en ce que le tuyau en élastomère (21) est disposé sur l'un des partenaires de réaction (12, 13) dans une gorge annulaire (20) de pourtour, et en ce que les éléments de liaison à ajustement de forme (23) mobiles radialement entourent le tuyau en élastomère (21), du côté supérieur et du côté inférieur par des branches (24, 25), à la façon de pinces, les branches (24, 25) étant guidées radialement dans des évidements (26) à forme annulaire, dont le volume est délimité du côté supérieur et inférieur par le tuyau en élastomère (21) et la gorge annulaire (20).

6. Dispositif selon la revendication 1, caractérisé en ce que, sur le partenaire d'accostage (12, 13) présentant les éléments de liaison à ajustement de forme (17) rigides, est prévue en face frontale une collerette (18) biseautée, faisant saillie radialement, qui saisit par l'arrière, avec un verrouillage axial, les éléments de liaison à ajustement de forme (23, 31) mobiles radialement de l'autre partenaire de réaction (12, 13), lorsque le pistolet distributeur (13) est en position d'encliquetage.

7. Dispositif selon la revendication 2, caractérisé en ce que chaque fois un segment de denture (31) est monté sur l'extrémité libre (32) d'un cliquet (33), susceptible de pivoter transversalement par rapport à la direction d'accostage, autour d'un axe de rotation (35) parallèle à l'axe de tubulure de remplissage (34).

8. Dispositif selon la revendication 7, caractérisé en ce que l'organe d'actionnement du cliquet (33) est un piston de travail (30), guidé dans un cylindre de travail (28) orienté radialement et ouvert en direction de la denture conjuguée (17) de l'autre partenaire de réaction (12, 13), piston au moyen duquel le segment de denture (31) est susceptible d'être sollicité du côté intérieur.

9. Dispositif selon la revendication 8, caractérisé en ce que le cylindre de travail (28) est raccordé du côté arrière à un canal à fluide (29) relié à une source de pression.

10. Dispositif selon la revendication 8, caractérisé en ce que le segment de denture (31), dans la position non actionnée, appuie sur le bord d'ouverture (37) du cylindre de travail (28), sous la charge d'un ressort, au moyen d'un ressort spiral (38) précontraint, disposé autour de l'axe de rotation de cliquet (35).

11. Dispositif selon la revendication 10, caractérisé en ce que la position relative de l'axe de rotation (35) et la longueur du cliquet ainsi que la position du bord d'ouverture (37) du cylindre de travail (28) sont telles que l'angle de pivotement, pour atteindre une position d'encliquetage du segment de denture (31) sur la denture conjuguée (17) de l'autre partenaire d'accostage (12, 13), est compris dans la plage située entre 5° et 20°, unitairement pour tous les cliquets (33) prévus.

12. Dispositif selon la revendication 1, caractérisé en ce qu'un étrier (45) susceptible de pivoter de 90° en une position verticale, intégré dans la périphérie de la garniture d'accostage (12), est disposé sur la garniture d'accostage (12), pour procéder à l'ouverture et à la fermeture manuelle du couvercle d'obturateur (2).
